# EUROPÄISCHE PATENTSCHRIFT

(11) **EP 3 624 286 B1**
(45) Veröffentlichungstag und Bekanntmachung des Hinweises auf die Patenterteilung: **16.06.2021**
(21) Anmeldenummer: 18194408.3
(22) Anmeldetag: 14.09.2018
(51) Int. Cl.: H02G 3/18

(54) **SOCKELUNTERTEIL FÜR ELEKTROINSTALLATIONSGERÄTE**
BASE LOWER PART FOR ELECTROINSTALLATION DEVICES
PARTIE INFÉRIEUR DU SOCLE POUR APPAREILS D'INSTALLATION ÉLECTRIQUES

(43) Veröffentlichungstag der Anmeldung: 18.03.2020
(73) Patentinhaber: GIRA GIERSIEPEN GmbH & Co. KG, 42477 Radevormwald (DE)
(72) Erfinder: STREHLE, Ronny, 42499 Hückeswagen (DE)
(74) Vertreter: Patent- und Rechtsanwälte Dr. Solf & Zapf

(56) Entgegenhaltungen:
- EP-A1- 0 854 554
- CH-A5- 636 542
- DE-A1- 1 515 601
- DE-U1- 20 013 233

## Beschreibung

Die vorliegende Erfindung betrifft ein Sockelunterteil für ein Elektroinstallationsgerät, z. B. eine elektrische Steckdose, umfassend einen Sockel und einen Tragring, wobei der Tragring mit zwei am Tragringumfang angeordneten Bördelbuchsen an dem Sockel befestigt ist, wobei die Bördelbuchsen durch Öffnungen des Tragsrings verlaufen, und der Tragring am Sockel mittels eines an den Bördelbuchsen an deren von dem Sockel abgekehrten Enden erzeugten Bördelkragens und eines ersten Anlageabschnitts der Bördelbuchse fixiert ist, wobei der erste Anlageabschnitt an dem Sockel an dessen von dem Bördelkragen abgekehrten Unterseite anliegt.

Derartige bekannte Sockelunterteile weisen eine Spreizkrallenbefestigung auf, um beispielsweise in Unterputz-Einbaudosen Verwendung zu finden. Bei der bekannten Anordnung der Einzelteile wie Sockel, Tragring, Bördelbuchse, Spreizkralle und Schraube für die Betätigung der Spreizkralle besteht das Problem, dass bereits bei geringsten Drehmomenten der Schraube eine hohe Vorspannkraft erzeugt wird, welche wiederum auf die Bördelbuchse übertragen wird. Da die Position der Bördelbuchse bei den bekannten Ausführungen nur über die Auflageflächen zwischen dem Sockel und der Bördelbuchse definiert wird, und die korrespondierenden Auflageflächen in der Regel nicht beliebig groß sein können, ist die entsprechend resultierende Vorspannkraft der Schraube limitiert. In der Regel liegen die Anforderungen an das Drehmoment der Schraube, und somit die entsprechende Vorspannkraft hierzu, meist über der zulässigen Spannung, insbesondere bei thermoplastischen Sockelwerkstoffen, was dazu führt, dass die Auflageflächen im Sockel nachgeben, und zwar auf Grund plastischer Verformung des Sockels, und somit nach Deinstallation eine gelockerte Sockel-Tragring-Verbindung vorgefunden wird.

Der Erfindung liegt die Aufgabe zu Grunde, bei Verwendung von thermoplastischen Werkstoffen für den Sockel den Einfluss der plastischen Verformung wesentlich zu reduzieren, so dass auch bei hohen Vorspannkräften der Schraube eine Lockerung der Sockel-Tragring-Verbindung vermieden wird.

Erfindungsgemäß wird dies ausgehend von einem Sockelunterteil der eingangs beschriebenen Art dadurch erreicht, dass ein zweiter Anlageabschnitt an der Bördelbuchse derart ausgebildet ist, dass der Tragring mit seiner von dem Bördelkragen abgewandten Tragringunterseite an dem zweiten Anlageabschnitt unmittelbar anliegt. Bei der erfindungsgemäßen Ausführung liegt der erste Anlageabschnitt wie gewöhnlich am Sockel an dessen Anlagefläche an. Der erfindungsgemäße zweite Anlageabschnitt liegt direkt unterhalb des Tragrings an. Durch den Bördelkragen, welcher durch mechanische Arbeit an der Bördelbuchse erzeugt wird, entsteht eine unlösbare Verbindung zwischen Sockel und Tragring. Durch die Erfindung können bei erhöhter Krafteinleitung zur Befestigung mittels der Spreizkralle zusätzliche Axialkräfte in den Tragring eingeleitet werden.

Die Bördelbuchse weist ein Innengewinde auf, in das eine Schraube eingeschraubt wird, um die Spreizkralle von ihrer Ruhestellung in ihre Spannstellung zu spreizen, wodurch die Befestigung des Sockelunterteils in beispielsweise einer Unterputz-Einbaudose erfolgt.

Selbst wenn die auftretenden Axialkräfte, die auf die Bördelbuchse beim Einschrauben der Schraube entstehen, die zulässigen Spannungen von Sockel und Tragring übersteigen, und somit eine plastische Verformung des aus thermoplastischem Material bestehenden Sockels und des Tragrings erfolgt, bleibt die Sockel-Tragring-Verbindung gemäß der erfindungsgemäßen Anordnung der Einzelteile fest und spielfrei.

Vorteilhafte Ausführungen der Erfindung sind in den Unteransprüchen enthalten.

Anhand der in den beiliegenden Zeichnungen dargestellten Ausführungsbeispiele wird die Erfindung näher erläutert. Es zeigen:
- Fig. 1a: eine perspektivische Ansicht eines Teilausschnitts eines erfindungsgemäßen Sockelteils mit Schnitt im Bereich vor der Bördelbuchse,
- Fig. 1b: eine Vergrößerung der Fig. 1a im Bereich der Bördelbuchse,

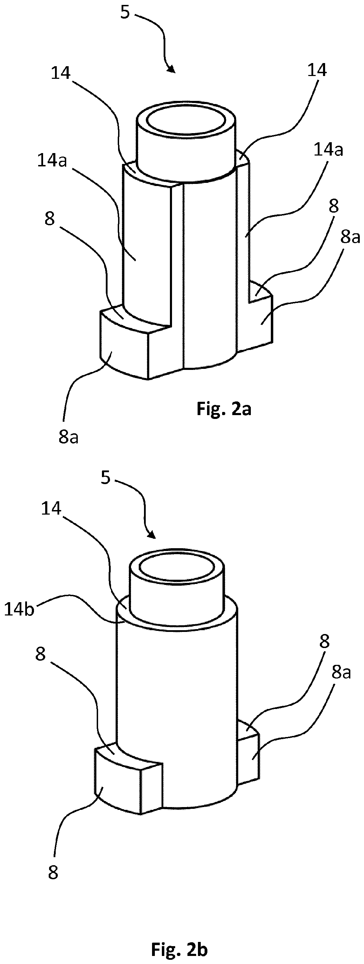

- Fig. 2a und Fig. 2b: Ansichten zweier unterschiedlicher Varianten einer erfindungsgemäßen Bördelbuchse.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

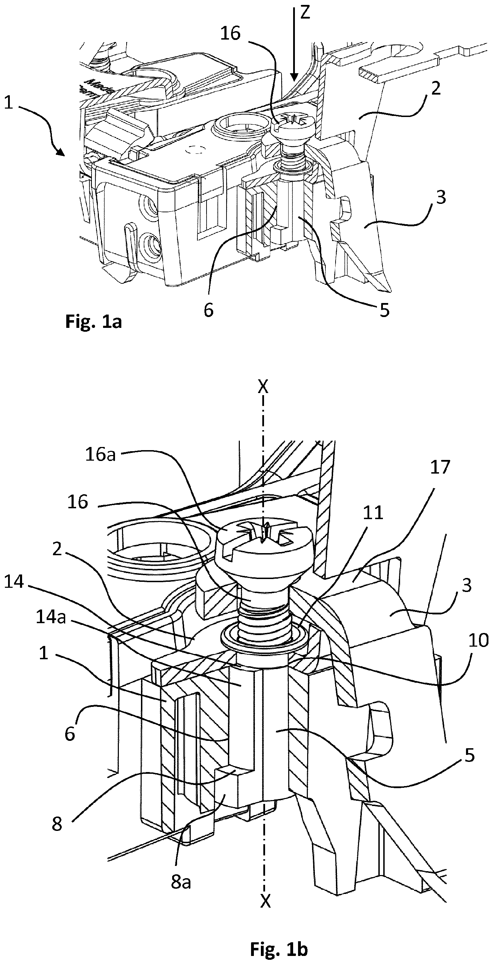

In Fig. 1a und 1b ist beispielhaft ein erfindungsgemäßes Sockelunterteil für ein Elektroinstallationsgerät, z. B. einen Steckdoseneinsatz, dargestellt. Dieses Sockelunterteil umfasst einen Sockel 1, der als Kunststoff-Formteil aus einem thermoplastischen Kunststoffmaterial hergestellt ist. An dem Sockel 1 ist ein Tragring 2 befestigt. Dieser Tragring 2 dient zur Befestigung des Sockelunterteils, z. B. in einer Aufnahmeöffnung einer Einbau-Unterputzdose oder dergleichen. Weiterhin ist an dem Sockel 1 eine Spreizkrallenanordnung aus z. B. zwei am Umfang des Sockelunterteils einander gegenüberliegenden Spreizkrallen 3 gelagert. Der Tragring 2 wird am Umfang des Sockels 1 an zwei einander gegenüberliegenden, um 180 ° zueinander versetzten Stellen z. B. mit Lagerfortsätzen befestigt. Als Befestigungsmittel wird jeweils eine Bördelbuchse 5 verwendet. Diese Bördelbuchse 5 ist in eine Durchgangsöffnung 6 des Sockels 1 eingesetzt. Die Durchgangsöffnung 6 verläuft vorteilhafterweise senkrecht zu einer Oberseite des Sockels 1, und die Oberseite des Sockels 1 und eine Montageebene des Tragrings 2 verlaufen insbesondere parallel zueinander. Die Bördelbuchse 5 liegt an ihrem im Sockel 1 liegenden Ende im montierten Zustand mit einem ersten Anlageabschnitt 8 an einer Anlagefläche des Sockels 1 an seiner Unterseite an. Dieser erste Anlageabschnitt 8 besteht insbesondere aus zwei um 180 ° gegeneinander versetzte, in Bezug auf eine mittlere Längsachse X-X der Bördelbuchse 5 von derem Umfang radial nach außen abstehenden, stufenförmigen Ansätzen 8a, die sich umfangsgemäß jeweils über eine Teillänge des Umfangs der Bördelbuchse 5 erstrecken. Diese Ansätze 8a liegen im montierten Zustand mit ihrer Anlagefläche an einer Gegenfläche an der Sockelunterseite an. Vorteilhafterweise ist die Bördelbuchse 5 im Sockel 1 gegen Verdrehung gesichert gelagert. Hierzu können z. B. die Ansätze 8a in Führungsnuten im Sockel 1 an dessen Unterseite geführt sein, wobei diese Führungsnuten parallel zur Längsachse X-X verlaufen.

Der Tragring 2 wird auf dem Sockel 1 mittels der Bördelbuchsen 5 befestigt, wobei der Tragring 2 insbesondere in seinen Lagerfortsätzen Durchgangsöffnungen 10 aufweist, durch die die Bördelbuchsen 5 jeweils verlaufen. Durch die Ausbildung eines Bördelkragens 11, an dem aus der jeweiligen Durchgangsöffnung 10 herausragenden Ende der Bördelbuchse 5, wird der Tragring 2 auf dem Sockel 1 unlösbar fixiert, wobei der Tragring 2 an den Sockel 1 angepresst wird.

Gemäß der Erfindung weist die Bördelbuchse 5 weiterhin einen zweiten Anlageabschnitt 14 auf. Dieser zweite Anlageabschnitt 14 ist am Umfang der Bördelbuchse 5 derart ausgebildet und besitzt eine derartige radiale Erstreckung in Bezug auf die Längsachse X-X nach außen, dass er die Durchgangsöffnung 10 des Tragrings 2 randseitig untergreift, so dass der Tragring 2 in seinem montierten Zustand unmittelbar an dem zweiten Anlageabschnitt 14 anliegt. Hierdurch wird der Tragring 2 im Bereich des zweiten Anlageabschnitts 14 zwischen dem Bördelkragen 11 und dem Sockel 1 bzw. dem zweiten Anlageabschnitt 14 fixiert, da sowohl eine Anlage des Tragrings 2 am Sockel 1 als auch am zweiten Anlageabschnitt 14 gegeben ist.

Der zweite Anlageabschnitt 14 kann erfindungsgemäß aus zwei gegeneinander um 180 ° am Umfang der Bördelbuchse 5 angeformten Fortsätzen 14a bestehen. Diese Fortsätze 14a erstrecken sich in Bezug auf die Längsachse X-X der Bördelbuchse 5 vom Umfang der Bördelbuchse 5 in radialer Richtung nach außen und verlaufen in Umfangsrichtung über einen Teilabschnitt des Umfangs der Bördelbuchse 5.

Die Fortsätze 14a besitzen insbesondere die gleiche Anordnung am Umfang der Bördelbuchse 5 wie die stufenförmigen Ansätze 8a.

Alternativ kann der zweite Anlageabschnitt 14 auch von einer Ringstufe 14b gebildet werden, die über den gesamten Umfang der Bördelbuchse 5 verläuft, und die den Öffnungsrand der Durchgangsöffnung 10 des Tragrings 2 umfangsgemäß untergreift.

Der Durchmesser des ersten Anlageabschnittes 8 ist größer als der Durchmesser des zweiten Anlageabschnittes 14.

Die Bördelbuchse 5 weist einen Innengewindeabschnitt 15 auf, in den eine Schraube 16 eindrehbar ist. Diese Schraube 16 drückt beim Einschrauben in die Bördelbuchse 5 mit ihrem Schraubenkopf 16a einen auf ihr gelagerten Abschnitt 17 einer nicht näher eingezeichneten Spreizkralle über einen Drehpunkt der Spreizkralle am Tragring 2 in Richtung auf den Sockel 1 nach unten. Eine Zugkraft an der Bördelbuchse 5, die durch das Eindrehen der Schraube 16 erzeugt wird, kann erfindungsgemäß über den ersten und zweiten Anlageabschnitt 8, 14, und zwar über den ersten Anlageabschnitt 8 auf den Sockel 1 und über den zweiten Anlageabschnitt 14 auf den Tragring 2, übertragen werden, so dass somit eine Aufteilung der auftretenden Axialkraft erfolgt, wodurch die Gefahr einer plastischen Verformung bzw. Deformation des Sockels im Bereich des Anlageabschnitts 8 verringert wird. Sofern die auftretende Zugkraft die elastischen Spannungen des Sockels 1 und des Tragrings 2 übersteigt, kann es zu plastischen Deformationen kommen. Diese wirken sich aber auf Grund der erfindungsgemäßen Ausgestaltung und Anordnung des zweiten Anlageabschnitts 14 an der Bördelbuchse 5 auf die Verbindung von Sockel 1 und Tragring 2 nicht negativ aus, da eine plastische Deformation der Bauteile nur punktuell auftritt, und die Anlagefläche zwischen dem Sockel 1 und dem Tragring 2 weiterhin gegeben ist.

Vorteilhafterweise ist der Innengewindeabschnitt 15 der Bördelbuchse 5 derart angeordnet, dass er in Einschraubrichtung Z der Schraube 16 gesehen, hinter dem zweiten Anlageabschnitt 14 beginnt und sich insbesondere bis zum im Sockel 1 liegenden Ende der Bördelbuchse 5 erstreckt. Hierdurch wird die beschriebene Aufteilung der Zugkraft gewährleistet.

Der Sockel 1 ist, wie bereits ausgeführt, aus einem thermoplastischen Kunststoff hergestellt. Der Tragring 2 ist aus Metall gefertigt. Die Bördelbuchse 5 ist ebenfalls aus Metall, insbesondere aus Messing hergestellt.

### Bezugszeichenliste

- 1: Sockel
- 2: Tragring
- 3: Spreizkralle
- .5: Bördelbuchse
- 6: Durchgangsöffnung
- 8: Anlageabschnitt
- 8a: Ansätze
- 10: Durchgangsöffnung
- 11: Bördelkragen
- 14: zweiter Anlageabschnitt
- 14a: Fortsätze
- 14b: Ringstufe
- 15: Innengewindeabschnitt
- 16: Schraube
- 16a: Schraubenkopf
- 17: Abschnitt
- X-X: mittlere Längsachse
- Z: Einschraubrichtung

## Patentansprüche

1. Sockelunterteil für ein Elektroinstallationsgerät, z. B. eine elektrische Steckdose, umfassend einen Sockel (1) und einen Tragring (2), wobei der Tragring (2) mit zwei am Tragringumfang angeordneten Bördelbuchsen (5) am Sockel (1) befestigt ist, wobei die Bördelbuchsen (5) durch Öffnungen (10) des Tragrings (2) verlaufen, und der Tragring (2) am Sockel (1) mittels eines an den Bördelbuchsen (5) an deren von dem Sockel (1) abgekehrten Enden erzeugten Bördelkragens (11) und eines ersten Anlageabschnitts (8) der Bördelbuchse (5) fixiert ist, wobei der erste Anlageabschnitt (8) an dem Sockel (1) an dessen von dem Bördelkragen (11) abgekehrten Unterseite anliegt, **dadurch gekennzeichnet, dass** ein zweiter Anlageabschnitt (14) an der Bördelbuchse (5) derart ausgebildet ist, dass der Tragring (2) mit seiner von dem Bördelkragen (11) abgewandten Tragringunterseite an dem zweiten Anlageabschnitt (14) unmittelbar anliegt, wobei der zweite Anlageabschnitt (14) am Umfang der Bördelbuchse (5) derart ausgebildet ist, dass er die Durchgangsöffnung (10) des Tragrings (2) randseitig untergreift und aus zwei 180 ° zueinander versetzt am Umfang der Bördelbuchse (5) ausgebildeten Fortsätzen (14a) gebildet ist.

2. Sockelunterteil nach Anspruch 1,
**dadurch gekennzeichnet, dass** der erste Anlageabschnitt (8) aus zwei um 180 ° zueinander versetzt am Umfang der Bördelbuchse (5) ausgebildeten stufenförmigen Ansätzen (8a) gebildet ist, die sich in Bezug auf eine mittlere Längsachse (X-X) der Bördelbuchse (5) radial nach außen erstrecken.

3. Sockelunterteil nach Anspruch 1 oder 2,
**dadurch gekennzeichnet, dass** die Fortsätze (14a) die gleiche Anordnung am Umfang der Bördelbuchse (5) aufweisen, wie die stufenförmigen Ansätze (8a).

4. Sockelunterteil nach Anspruch 1 oder 2,
**dadurch gekennzeichnet, dass** der zweite Anlageabschnitt (14) als Ringstufe (14b) ausgebildet ist, die den Öffnungsrand der Durchgangsöffnung (10) im Tragring (2) umfangsgemäß untergreift.

5. Sockelunterteil nach einem der Ansprüche 1 bis 4,
**dadurch gekennzeichnet, dass** die Bördelbuchse (5) im Sockel (1) gegen Verdrehung in Umfangsrichtung fixiert ist.

6. Sockelunterteil nach einem der Ansprüche 1 bis 5,
**dadurch gekennzeichnet, dass** die Bördelbuchse (5) einen Innengewindeabschnitt (15) aufweist.

7. Sockelunterteil nach Anspruch 6,
**dadurch gekennzeichnet, dass** der Innengewindeabschnitt (15) derart angeordnet ist, dass dieser in Einschraubrichtung (Z) gesehen hinter dem zweiten Anlageabschnitt (14) beginnt.

8. Sockelunterteil nach einem der Ansprüche 1 bis 7,
**dadurch gekennzeichnet, dass** der Durchmesser des ersten Anlageabschnittes (8) größer ist als der Durchmesser des zweiten Anlageabschnittes (14).

9. Sockelunterteil nach einem der Ansprüche 1 bis 8,
**dadurch gekennzeichnet, dass** der Sockel (1) aus einem thermoplastischen Kunststoffmaterial gefertigt ist.

## Claims

1. Base lower part for an electroinstallation device, e.g. an electrical plug socket, comprising a base (1) and a support ring (2), wherein the support ring (2) is fastened to the base (1) with two flange bushes (5) arranged on the support ring circumference, wherein the flange bushes (5) extend through openings (10) of the support ring (2), and the support ring (2) is fixed on the base (1) by means of a flange collar (11) created on the flange bushes (5) on the ends of the same facing away from the base (1) and by means of a first contact section (8) of the flange bush (5), wherein the first contact section (8) lies against the base (1) on the lower side of the same facing away from the flange collar (11), **characterized in that**
a second contact section (14) is formed on the flange bush (5) in such a manner that the support ring (2) with its support ring lower side facing away from the flange collar (11) directly abuts against the second contact section (14),
wherein
the second contact section (14) is formed on the circumference of the flange bush (5) in such a manner that it engages under the passage opening (10) of the support ring (2) on the edge side and is formed of two extensions (14a) formed on the circumference of the flange bush (5) offset by 180° to one another.

2. Base lower part according to Claim 1, **characterized in that** the first contact section (8) is formed of two step-shaped projections (8a) formed on the circumference of the flange bush (5) offset by 180° to one another, which with respect to a central longitudinal axis (X-X) of the flange bush (5) extend radially to the outside.

3. Base lower part according to Claim 1 or 2, **characterized in that** the extensions (14a) have the same arrangement on the circumference of the flange bush (5) as the step-shaped projections (8a).

4. Base lower part according to Claim 1 or 2, **characterized in that** the second contact section (14) is formed as a ring step (14b), which circumferentially engages under the opening edge of the passage opening (10) in the support ring (2).

5. Base lower part according to any one of Claims 1 to 4, **characterized in that** the flange bush (5) is fixed in the base (1) against rotation in the circumferential direction.

6. Base lower part according to any one of Claims 1 to 5, **characterized in that** the flange bush (5) has an internal thread section (15).

7. Base lower part according to Claim 6, **characterized in that** the internal thread section (15) is arranged in such a manner that the same, seen in the screwing-in direction (Z), starts behind the second contact section (14).

8. Base lower part according to any one of Claims 1 to 7, **characterized in that** the diameter of the first contact section (8) is greater than the diameter of the second contact section (14).

9. Base lower part according to any one of Claims 1 to 8, **characterized in that** the base (1) is produced from a thermoplastic material.

## Revendications

1. Partie inférieure de socle pour un appareil d'installation électrique, par exemple une prise électrique, comprenant un socle (1) et un anneau porteur (2), l'anneau porteur (2) étant fixé au socle (1) par deux douilles de sertissage (5) disposées sur la circonférence de l'anneau porteur, les douilles de sertissage (5) s'étendant à travers les ouvertures (10) de l'anneau porteur (2), et l'anneau porteur (2) étant fixé au socle (1) au moyen d'une collerette de sertissage (11) créée sur les douilles de sertissage (5) au niveau de leurs extrémités détournées du socle (1) et au moyen d'une première section d'application (8) de la douille de sertissage (5), la première section d'application (8) étant appliquée contre le socle (1) au niveau de sa face inférieure détournée de la collerette de sertissage (11),
**caractérisée en ce qu'**une deuxième section d'application (14) sur la douille de sertissage (5) est réalisée de telle sorte que l'anneau porteur (2) s'applique directement contre la deuxième section d'application (14) par sa face inférieure d'anneau porteur, détournée de la collerette de sertissage (11), dans laquelle la deuxième section d'application (14) sur la circonférence de la douille de sertissage (5) est réalisée de telle sorte qu'elle passe côté bord sous l'ouverture de passage (10) de l'anneau porteur (2) et est formée par deux prolongements (14a) réalisés de manière décalée de 180° l'un par rapport à l'autre sur la circonférence de la douille de sertissage (5).

2. Partie inférieure de socle selon la revendication 1, **caractérisée en ce que** la première section d'application (8) est formée par deux saillies (8a) en forme de gradin, réalisées de manière décalée de 180° l'une par rapport à l'autre sur la circonférence de la douille de sertissage (5) et qui s'étendent radialement vers l'extérieur par rapport à un axe longitudinal médian (X-X) de la douille de sertissage (5).

3. Partie inférieure de socle selon la revendication 1 ou 2, **caractérisée en ce que** les prolongements (14a) présentent la même disposition sur la circonférence de la douille de sertissage (5) que les saillies en forme de gradin (8a).

4. Partie inférieure de socle selon la revendication 1 ou 2, **caractérisée en ce que** la deuxième section d'application (14) est réalisée sous la forme d'un gradin annulaire (14b) qui passe en circonférence sous le bord d'ouverture de l'ouverture de passage (10) dans l'anneau porteur (2).

5. Partie inférieure de socle selon l'une quelconque des revendications 1 à 4, **caractérisée en ce que** la douille de sertissage (5) est fixée dans le socle (1) contre une torsion dans la direction circonférentielle.

6. Partie inférieure de socle selon l'une quelconque des revendications 1 à 5, **caractérisée en ce que** la douille de sertissage (5) présente une section filetée intérieure (15).

7. Partie inférieure de socle selon la revendication 6, **caractérisée en ce que** la section filetée intérieure (15) est disposée de telle sorte qu'elle commence après la deuxième section d'application (14), vue dans la direction de vissage (Z).

8. Partie inférieure de socle selon l'une quelconque des revendications 1 à 7, **caractérisée en ce que** le diamètre de la première section d'application (8) est supérieur au diamètre de la deuxième section d'application (14).

9. Partie inférieure de socle selon l'une quelconque des revendications 1 à 8, **caractérisée en ce que** le socle (1) est fabriqué à partir d'un matériau synthétique thermoplastique.
